(19) Europäisches Patentamt European Patent Office Office européen des brevets

(11) **EP 3 093 159 B1**

(12) **EUROPEAN PATENT SPECIFICATION**

(45) Date of publication and mention of the grant of the patent:
**03.02.2021 Bulletin 2021/05**

(21) Application number: **14877684.2**

(22) Date of filing: **22.12.2014**

(51) Int Cl.:
*C08J 9/06* (2006.01)   *B60C 1/00* (2006.01)
*C08L 21/00* (2006.01)   *C08J 9/00* (2006.01)
*C08J 9/10* (2006.01)   *C08J 9/08* (2006.01)

(86) International application number:
**PCT/JP2014/083895**

(87) International publication number:
**WO 2015/104985 (16.07.2015 Gazette 2015/28)**

(54) **PNEUMATIC TIRE**

LUFTREIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.01.2014 JP 2014003485**

(43) Date of publication of application:
**16.11.2016 Bulletin 2016/46**

(73) Proprietor: **Sumitomo Rubber Industries, Ltd. Kobe-shi, Hyogo 651-0072 (JP)**

(72) Inventor: **MATSUMOTO, Norihiro Kobe-shi, Hyogo 651-0072 (JP)**

(74) Representative: **Manitz Finsterwald Patent- und Rechtsanwaltspartnerschaft mbB Martin-Greif-Strasse 1 80336 München (DE)**

(56) References cited:
**JP-A- H0 885 303       JP-A- H07 276 909
JP-A- H07 276 909      JP-A- 2007 176 267
JP-A- 2012 031 231     JP-A- 2013 169 943
JP-B2- 3 416 284**

**Description**

TECHNICAL FIELD

The present invention relates to a pneumatic tire including a foam rubber layer in a sidewall layer.

BACKGROUND ART

The properties required for automobile tires include quietness and riding comfort. These properties result from the propagation of vibration from the road to inside the automobile through the tires during running of the automobile. In particular, the quietness is largely affected by noise ranging from 50 to 400 kHz, and such noise has been reduced by taking measures such as reducing the groove pattern percentage on the surface of the tire tread. However, the groove pattern on the surface of the tire tread also provides a large contribution to other properties such as wet grip performance and hydroplaning resistance. Thus, reducing the groove pattern percentage can impair these properties.

Meanwhile, pneumatic tires in which foam rubber is used in the tread portion have been manufactured and marketed, including studless winter tires dedicated to performance on ice (Patent Literature 1). However, this technique is intended to improve the on-ice performance of studless winter tires, and the level of quietness is still insufficient.

CITATION LIST

PATENT LITERATURE

Patent Literature 1: JP-A 2012-31231

Further prior art rubber compositions of a sidewall component of a tire are specified in JP H07 276909 A and JP 3 416284 B2.

SUMMARY OF INVENTION

TECHNICAL PROBLEM

The present invention aims to provide a pneumatic tire having improved quietness and improved riding comfort without sacrificing wet grip performance or hydroplaning resistance.

SOLUTION TO PROBLEM

Specifically, the present invention relates to a pneumatic tire, including a foam rubber layer in a sidewall, the foam rubber layer having an expansion ratio of 10 to 100% as defined by the following equation 1:

$$\text{Expansion ratio } [\%] = \left( \frac{\text{Density of solid phase part of vulcanized rubber}}{\text{Density of entire foam rubber}} - 1 \right) \times 100$$

wherein the foam rubber layer contains natural rubber and polybutadiene rubber,
the combined content of natural rubber and polybutadiene rubber, based on 100 parts by mass of the rubber component, is 65 parts by mass or more,
the foam rubber layer is formed using a thermally decomposable foaming agent, and
the amount of the thermally decomposable foaming agent is 10 parts by mass or more per 100 parts by mass of the rubber component.

Preferably, the foam rubber contains closed cells having an average cell diameter of 5 to 100 $\mu$m.

Preferably, the amount of the thermally decomposable foaming agent is 10 to 17 parts by mass per 100 parts by mass of the rubber component.

Preferably, the thermally decomposable foaming agent is at least one selected from the group consisting of azodicarbonamide (ADCA), N,N'-dinitrosopentamethylenetetramine (DPT), 4,4'-oxybis(benzenesulfonylhydrazide) (OBSH), and sodium hydrogen carbonate.

ADVANTAGEOUS EFFECTS OF INVENTION

According to the present invention, the use of a foam rubber layer having an expansion ratio of 10 to 100% in the sidewall portion of a tire can improve quietness and riding comfort by absorbing vibration that occurs during running of the automobile, without reducing the groove pattern percentage required for wet grip performance or hydroplaning resistance.

DESCRIPTION OF EMBODIMENTS

The pneumatic tire of the present invention features a foam rubber layer included in a sidewall, and the foam rubber layer has an expansion ratio of 10 to 100% as defined by the following equation 1:

$$\text{Expansion ratio } [\%] = \left( \frac{\text{Density of solid phase part of vulcanized rubber}}{\text{Density of entire foam rubber}} - 1 \right) \times 100.$$

As for the expansion ratio of the foam rubber layer, which is defined by the equation 1, a higher value indicates a larger number of closed cells per volume. The expansion ratio is 10 to 100%, preferably 15 to 80%, more preferably 20 to 70%. Foam rubber having an expansion ratio of less than 10% cannot sufficiently absorb vibration and is less likely to improve quietness and riding comfort, thus exhibiting performance substantially equivalent to that of non-foam rubber. Foam rubber having an expansion ratio of more than 100% also hardly improves quietness or riding comfort, and fails to ensure the rigidity required for running tires, thus reducing handling stability and adversely affecting running performance itself. The expansion ratio can be controlled by increasing or decreasing the amount of the foaming agent.

The average cell diameter of the foam rubber layer is preferably 5 to 100 pm, more preferably 10 to 85 $\mu$m, still more preferably 15 to 75 $\mu$m. Foam rubber having an average cell diameter of less than 5 $\mu$m cannot sufficiently absorb vibration and is less likely to improve quietness and riding comfort, thus exhibiting performance substantially equivalent to that of non-foam rubber. Foam rubber having an average cell diameter of more than 100 $\mu$m tends to also hardly improve quietness or riding comfort, and to fail to ensure the rigidity required for running tires, thus reducing handling stability and adversely affecting running performance itself.

In principle, the rubber composition used to form the foam rubber layer may contain any rubber component. Examples include diene rubbers such as natural rubber (NR), polyisoprene rubber (IR), styrene-butadiene rubber (SBR), polybutadiene rubber (BR), styrene-isoprene-butadiene rubber (SIBR), chloroprene rubber (CR), and acrylonitrile butadiene rubber (NBR). These may be used alone or in combinations of two or more. According the present invention, NR and BR however must be present; these are highly effective in improving crack growth resistance Any NR and any BR that are commonly used in the tire industry may be used.

The NR content based on 100 parts by mass of the rubber component is preferably 20 parts by mass or more, more preferably 25 parts by mass or more, still more preferably 30 parts by mass or more. Moreover, the NR content may be 100 parts by mass, but it is preferably 80 parts by mass or less, more preferably 75 parts by mass or less, still more preferably 65 parts by mass or less. The effect of the present invention can be well achieved when the NR content is within the above range.

The BR content based on 100 parts by mass of the rubber component is preferably 30 parts by mass or more, more preferably 40 parts by mass or more, still more preferably 45 parts by mass or more. Moreover, the BR content may be 100 parts by mass, but it is preferably 90 parts by mass or less, more preferably 85 parts by mass or less, still more preferably 80 parts by mass or less. The effect of the present invention can be well achieved when the BR content is within the above range.

The combined content of NR and BR, based on 100 parts by mass of the rubber component, is 65 parts by mass or more, preferably 75 parts by mass or more. The combined content may be 100 parts by mass.

Although in principle, any foaming agent may be used to form the foam rubber layer, according to the present invention, a thermally decomposable chemical foaming agent is used to give desired cells. Examples of the thermally decomposable chemical foaming agent include azodicarbonamide (ADCA), N,N'-dinitrosopentamethylenetetramine (DPT), 4,4'-oxybis(benzenesulfonylhydrazide) (OBSH), and sodium hydrogen carbonate. These may be used in combination.

The average particle size of the thermally decomposable chemical foaming agent is preferably 0.5 to 20 $\mu$m, more preferably 5 to 15 $\mu$m. When the foaming agent has an average particle size of more than 20 pm, heat distribution in particles of the foaming agent tends to be non-uniform, causing non-uniform thermal decomposition of the foaming agent to form cells with low roundness. Also, when the foaming agent has an average particle size of less than 0.5 pm, such a foaming agent can cause dust explosion or other hazards and is thus difficult to handle. Consequently, the workability tends to markedly decrease.

The amount of the thermally decomposable chemical foaming agent is at least 10 parts by mass, preferably 10 to 17 parts by mass, per 100 parts by mass of the rubber component. When the amount is more than 20 parts by mass, the expansion ratio tends to exceed 100%.

The rubber composition for the foam rubber layer may incorporate, in addition to the rubber component described above, any other additives usually used in production of rubber compositions, as appropriate. Any known additives may be used including, for example, vulcanizing agents such as sulfur; vulcanization accelerators such as thiazole vulcanization accelerators, thiuram vulcanization accelerators, sulfenamide vulcanization accelerators, and guanidine vulcanization accelerators; vulcanization activators such as stearic acid and zinc oxide; organic peroxides; fillers such as carbon black, silica, calcium carbonate, talc, alumina, clay, aluminum hydroxide, and mica; processing aids such as extender oils and lubricants; antioxidants; and coupling agents.

In order to ensure strength, carbon black is particularly preferred among other fillers. The BET nitrogen adsorption of carbon black is preferably 20 to 250 $m^2$/g, more preferably 20 to 200 $m^2$/g. When the BET nitrogen adsorption is less than 20 $m^2$/g, the flex cracking growth resistance and crack resistance tend to decrease. When the BET nitrogen adsorption is more than 250 $m^2$/g, the processability tends to deteriorate. The BET nitrogen adsorption specific surface area of carbon black can be determined in accordance with the method of ASTM D3037-81.

The amount of carbon black per 100 parts by mass of the rubber component is preferably 5 parts by mass or more, more preferably 15 parts by mass or more. The amount of carbon black is preferably 200 parts by mass or less, more preferably 150 parts by mass or less, particularly preferably 100 parts by mass or less. The use of carbon black in the above range can ensure good processability, good flex cracking growth resistance, and good crack resistance.

The shape of foams produced is not particularly limited.

The pneumatic tire of the present invention can be formed from the rubber composition by usual methods. Specifically, the unvulcanized rubber composition prepared by adding various additives to the rubber component as needed is extruded into the shape of a tire sidewall, or alternatively the rubber composition may be extruded into a specific shape and assembled with a sidewall component. The resulting sidewall component is assembled with other tire components on a tire building machine in a usual manner to build an unvulcanized tire. The unvulcanized tire is heated and pressurized in a vulcanizer to cause foaming. Thus, the pneumatic tire of the present invention can be produced.

EXAMPLES

The present invention is specifically described below with reference to examples; however, the present invention is not limited thereto.

The chemicals used in examples and comparative examples are listed below.

Natural rubber (NR): RSS#3, 40 parts by mass

Polybutadiene rubber (BR): Nipol BR1220 available from Zeon Corporation, 60 parts by mass

Carbon black: SEAST N550 available from Mitsubishi Chemical Corporation (nitrogen adsorption specific surface area: 43 $m^2$/g), 60 parts by mass

Zinc oxide: Zinc oxide #1 available from Mitsui Mining & Smelting Co., Ltd., 5 parts by mass

Stearic acid: Stearic acid beads "Tsubaki" available from NOF Corporation, 5 parts by mass

Oil: Process X-140 available from Japan Energy Corporation, 10 parts by mass

Antioxidant: Antigene 6C (N-(1,3-dimethylbutyl)-N'-phenyl-p-phenylenediamine) available from Sumitomo Chemical Co., Ltd., 3 parts by mass

Wax: SUNNOC N available from Ouchi Shinko Chemical Industrial Co., Ltd., 10 parts by mass

Sulfur: Powdered sulfur available from Karuizawa Iou Co. , Ltd., 2 parts by mass

Vulcanization accelerator: Nocceler CZ (N-cyclohexyl-2-benzothiazolyl sulfenamide) available from Ouchi Shinko Chemical Industrial Co., Ltd., 1 part by mass Foaming agent: NEOCELLBORN N#1000SW (4,4'-oxybis(benzenesulfonylhydrazide), average particle size: 14 μm) available from Eiwa Chemical Ind. Co., Ltd., various amounts

Examples 1 to 3 and Comparative Examples 1 to 3

The foaming agent was used in the amounts shown in Table 1 per 100 parts by mass of the rubber component and kneaded with materials other than the sulfur and vulcanization accelerator using a 1.7-L Banbury mixer at 150°C for 3 minutes. Thus, kneaded mixtures were obtained. Subsequently, the sulfur and vulcanization accelerator were added to the kneaded mixtures, followed by kneading using an open roll mill at 50°C for 5 minutes . Thus, unvulcanized rubber compositions were prepared.

Each unvulcanized rubber composition was formed into a sidewall shape and assembled with other tire components, followed by vulcanization at 170°C for 15 minutes. In this manner, the tires (tire size: 195/65R15) of the examples and the comparative examples were prepared. The expansion ratios are shown in Table 1. The tires were evaluated as follows. Table 1 shows the evaluation results. Note that example 2 is a reference example.

<Quietness>

Each test tire was mounted on an aluminum wheel rim of 15 × 6JJ, filled with air at an internal pressure of 210 kPa (same for the front and rear tires), and mounted on the four wheels of a front-engine, front-wheel-drive car (2000 cc displacement, made in Japan). A single driver with no passengers drove the car on a road noise measurement road (asphalt rough surface road) in a test track at a speed of 60 km/H. The noise in the car while driving was subjectively evaluated by the driver. The results are indexed to Comparative Example 1 = 100. A higher index indicates greater quietness.

<Riding comfort>

Each test tire was mounted on an aluminum wheel rim of 15 × 6JJ, filled with air at an internal pressure of 210 kPa (same for the front and rear tires), and mounted on the four wheels of a front-engine, front-wheel-drive car (2000 cc displacement, made in Japan). A single driver with no passengers drove the car in a test track for subjective evaluation. The results are indexed to Comparative Example 1 = 100. A higher index indicates better riding comfort.

<Wet grip performance>

Each test tire was mounted on an aluminum wheel rim of 15 × 6JJ, filled with air at an internal pressure of 210 kPa (same for the front and rear tires), and mounted on the four wheels of a front-engine, front-wheel-drive car (2000 cc displacement, made in Japan). A single driver drove the car on a wet asphalt road in a test track to determine the braking distance from an initial speed of 100 km/h. The results were evaluated using a wet grip performance index with Example 1 = 100. In the evaluation, the wet braking performance (wet grip performance) of each formulation was indexed to Comparative Example 1 = 100 according to the equation below. A higher index indicates better wet braking performance.

```
(Wet braking performance index) = (Braking distance of Example
1)/(Braking distance of each formulation) × 100
```

<Hydroplaning resistance>

Each test tire was mounted on an aluminum wheel rim of 15 × 6JJ, filled with air at an internal pressure of 210 kPa (same for the front and rear tires), and mounted on the four wheels of a front-engine, front-wheel-drive car (2000 cc displacement, made in Japan) . The car was driven around a track with a radius of 100 m in which a puddle having a depth of 5 mm and a length of 20 m was formed on an asphalt road, while increasing the speed stepwise to determine the lateral acceleration (lateral G). The average lateral G of the front wheels at speeds ranging from 50 to 80 km/h was calculated (lateral hydroplaning test). The results are indexed to Comparative Example 1 = 100. A higher index indicates better hydroplaning resistance.

<Handling stability>

Each test tire was mounted on an aluminum wheel rim of 15 × 6JJ, filled with air at an internal pressure of 210 kPa (same for the front and rear tires), and mounted on the four wheels of a front-engine, front-wheel-drive car (2000 cc displacement, made in Japan). A single driver with no passengers drove the car in a test track for subjective evaluation. The results are indexed to Comparative Example 1 = 100. A higher index indicates better handling stability.

[Table 1]

| Example numbers and Comparative Example numbers | Example | | | Comparative Example | | |
|---|---|---|---|---|---|---|
| | 1 | 2 | 3 | 1 | 2 | 3 |
| Amount of foaming agent (phr) | 12 | 5 | 20 | 0 | 3 | 30 |
| Expansion ratio (%) | 50 | 10 | 100 | 0 | 5 | 150 |
| Average cell diameter ($\mu$m) | 45 | 15 | 75 | 0 | 3 | 130 |
| Quietness | 120 | 110 | 150 | 100 | 100 | 150 |
| Riding comfort | 120 | 110 | 150 | 100 | 100 | 150 |
| Wet grip performance | 100 | 100 | 100 | 100 | 100 | 100 |
| Hydroplaning resistance | 100 | 100 | 100 | 100 | 100 | 100 |
| Handling stability | 90 | 95 | 85 | 100 | 100 | 50 |

According to Table 1, the tires of Examples 1 to 3 in which a foam rubber layer having an expansion ratio of 10 to 100% was used in the sidewall exhibited excellent handling stability while maintaining quietness, riding comfort, wet grip performance, and hydroplaning resistance, as compared to the tires of Comparative Examples 2 and 3 with expansion ratios of 5% and 150%, respectively.

## Claims

1.  A pneumatic tire, comprising a foam rubber layer in a sidewall, the foam rubber layer having an expansion ratio of 10 to 100% as defined by the following equation 1:

$$\text{Expansion ratio } [\%] = \left( \frac{\text{Density of solid phase part of vulcanized rubber}}{\text{Density of entire foam rubber}} - 1 \right) \times 100$$

wherein the foam rubber layer contains natural rubber and polybutadiene rubber,
the combined content of natural rubber and polybutadiene rubber, based on 100 parts by mass of the rubber component, is 65 parts by mass or more,
the foam rubber layer is formed using a thermally decomposable foaming agent, and
the amount of the thermally decomposable foaming agent is 10 parts by mass or more per 100 parts by mass of the rubber component.

2.  The pneumatic tire according to claim 1,
wherein the foam rubber contains closed cells having an average cell diameter of 5 to 100 $\mu$m.

3.  The pneumatic tire according to claim 1 or 2,
wherein the amount of the thermally decomposable foaming agent is 10 to 17 parts by mass per 100 parts by mass of the rubber component.

4.  The pneumatic tire according to one of the preceding claims,
wherein the thermally decomposable foaming agent is at least one selected from the group consisting of azodicarbonamide, N,N'-dinitrosopentamethylenetetramine, 4,4'-oxybis(benzenesulfonylhydrazide), and sodium hydrogen carbonate.

## Patentansprüche

1.  Luftreifen, der in einer Seitenwand eine Schaumkautschukschicht umfasst, wobei die Schaumkautschukschicht ein Ausdehnungsverhältnis von 10 bis 100% aufweist, wie durch die folgende Gleichung 1 definiert:

$$\text{Ausdehnungsverhältnis [\%]} = \left( \frac{\text{Dichte des Festphasenteils des vulkanisierten Kautschuks}}{\text{Dichte des gesamten Schaumkautschuks}} - 1 \right) \times 100$$

wobei die Schaumkautschukschicht Naturkautschuk und Polybutadienkautschuk enthält,
der Gesamtgehalt an Naturkautschuk und Polybutadienkautschuk, bezogen auf 100 Massenteile der Kautschukkomponente, 65 Massenteile oder mehr beträgt,
die Schaumkautschukschicht unter Verwendung eines thermisch zersetzbaren Schäumungsmittels gebildet ist, und die Menge des thermisch zersetzbaren Schäumungsmittels 10 Massenteile oder mehr pro 100 Massenteile der Kautschukkomponente beträgt.

2. Luftreifen nach Anspruch 1,
wobei der Schaumkautschuk geschlossene Zellen mit einem durchschnittlichen Zelldurchmesser von 5 bis 100 $\mu$m enthält.

3. Luftreifen nach Anspruch 1 oder 2,
wobei die Menge des thermisch zersetzbaren Schäumungsmittels 10 bis 17 Massenteile pro 100 Massenteile der Kautschukkomponente beträgt.

4. Luftreifen nach einem der vorangehenden Ansprüche,
wobei das thermisch zersetzbare Schäumungsmittel mindestens eines ist, welches ausgewählt ist aus der Gruppe bestehend aus Azodicarboxamid, N,N'-Dinitrosopentamethylentetramin, 4,4'-Oxybis(benzolsulfonylhydrazid) und Natriumhydrogencarbonat.

## Revendications

1. Pneu, comprenant une couche de caoutchouc mousse dans un flanc, la couche de caoutchouc mousse ayant un taux d'expansion de 10 à 100 %, tel que défini par l'équation 1 suivante :

$$\text{Taux d'expansion [\%]} = \left( \frac{\text{Densité de la partie de phase solide du caoutchouc vulcanisé}}{\text{Densité du caoutchouc mousse entier}} - 1 \right) x\,100$$

dans lequel la couche de caoutchouc mousse contient du caoutchouc naturel et du caoutchouc polybutadiène,
la teneur combinée de caoutchouc naturel et de caoutchouc polybutadiène, sur la base de 100 parties en masse du composant caoutchouté, est de 65 parties en masse ou plus,
la couche de caoutchouc mousse est formée en utilisant un agent de moussage décomposable par voie thermique, et la quantité d'agent de moussage décomposable par voie thermique est de 10 parties en masse ou plus pour 100 parties en masse du composant caoutchouté.

2. Pneu selon la revendication 1,
dans lequel le caoutchouc mousse contient des cellules fermées ayant un diamètre cellulaire moyen de 5 à 100 $\mu$m.

3. Pneu selon la revendication 1 ou la revendication 2,
dans lequel la quantité d'agent de moussage décomposable par voie thermique est de 10 à 17 parties en masse pour 100 parties en masse du composant caoutchouté.

4. Pneu selon l'une des revendications précédentes,
dans lequel l'agent de moussage décomposable par voie thermique est au moins un composé choisi dans le groupe constitué de l'azodicarbonamide, de la N,N'-dinitroso penta méthylène tétramine, du 4,4'-oxybis (benzène sulfonyl hydrazide), et de l'hydrogéno carbonate de sodium.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012031231 A
- JP H07276909 A
- JP 3416284 B